**Europäisches Patentamt**

**European Patent Office**

**Office européen des brevets**

(19)

(11) Veröffentlichungsnummer: **0 232 862**
**A2**

## (12) EUROPÄISCHE PATENTANMELDUNG

(21) Anmeldenummer: **87101629.1**

(22) Anmeldetag: **06.02.87**

(51) Int. Cl.⁴: **H03M 11/00**

(30) Priorität: **11.02.86 DE 3604236**

(43) Veröffentlichungstag der Anmeldung:
**19.08.87 Patentblatt 87/34**

(84) Benannte Vertragsstaaten:
**DE FR GB IT**

(71) Anmelder: **Wilhelm Ruf KG**
**Schwanthaler Strasse 18**
**D-8000 München 2(DE)**

(72) Erfinder: **Keller, Herbert**
**Mühlenstrasse 17**
**D-8212 Übersee(DE)**

(74) Vertreter: **von Bülow, Tam, Dipl.-Ing.,**
**Dipl.-Wirtsch.-Ing. et al**
**SAMSON & BÜLOW Widenmayerstrasse 5**
**D-8000 München 22(DE)**

(54) **Universell programmierbare Tastatur.**

(57) Die universell programmierbare Tastatur besitzt eine Schaltermatrix, der ein Encoder nachgeschaltet ist, der für jeden Matrixpunkt (Taste) ein Tastenkennungssignal erzeugt. Dem Encoder ist ein Codewandler nachgeschaltet, der aus einem fest programmierten Speicher (17) und einem elektrisch löschbaren, frei programmierbaren Speicher (16) besteht. Das Tastenkennungssignal dient als Adresse zum Auslesen der in den Speichern (16) und (17) gespeicherten Codes. Der elektrisch löschbare, frei programmierbare Speicher (16) hat Vorrang vor dem fest programmierten Speicher (17). Nur wenn im frei programmierbaren Speicher (16) unter der durch das Tastenkennungssignal bestimmten Adresse keine Codes abgelegt sind, wird der fest programmierte Speicher (17) abgefragt.

FIG. 12

## Universell programmierbare Tastatur

Die Erfindung bezieht sich auf eine universell programmierbare Tastatur gemäß dem Oberbegriff des Patentanspruches 1. Derartige Tastaturen - oder auch Tastenfelder genannt -sind allgemein bekannt und werden unter anderem für die Bedienung von Computern, Schreibsystemen etc. verwendet. Bei Drücken einer Taste (oder bestimmten Tastenkombination) soll nun am Ausgang der Tastatur ein bestimmter Code, d.h. eine der jeweiligen Taste eindeutig zuordenbare Bitkombination (seriell oder parallel) ausgegeben werden. Obwohl es internationale Vorschläge für die Zuordnung der Tasten zu den Codes gibt, beispielsweise den ASCII-Code, ist eine einheitliche Codierung nicht zu erwarten. Zum einen ist der ASCII-Code nicht vollständig und zum anderen zeigt die Erfahrung, daß nahezu jeder Hersteller unterschiedliche Codes für die einzelnen Tasten wünscht. Bei dem bekannten Tastenfeld ist daher der Codewandler vorgesehen, der so programmiert wird, daß er kundenspezifisch den jeweils gewünschten Code liefert.

Für das Programmieren dieses Codewandlers sind allerdings wiederum bestimmte Masken erforderlich, was fertigungstechnisch großen Aufwand bedeutet. Außerdem ist ein nachträgliches Umprogrammieren nicht oder nur mit großem Aufwand möglich.

Weiterhin besteht bei vielen Anwendungsfällen der Wunsch, durch Drücken einer einzigen Taste des Tastenfeldes unterschiedlich lange Codes, beispielsweise eine Folge mehrerer Befehle auszugeben, während bei anderen Tasten wiederum nur eine kurze Zeichenfolge von beispielsweise acht Bit ausgegeben werden soll. Eine solche Befehlsstruktur ist jedoch mit dem bekannten Codewandler nur schwer zu realisieren.

Aufgabe der Erfindung ist es daher, die Tastatur der eingangs genannten Art dahingehend zu verbessern, daß sie sehr einfach und auch nachträglich vom Anwender programmiert werden kann, wobei den einzelnen Tasten auch unterschiedlich lange Codes bis hin zu längeren Strings zugewiesen werden können.

Diese Aufgabe wird durch die im kennzeichnenden Teil des Patentanspruches 1 angegebenen Merkmale gelöst. Vorteilhafte Ausgestaltungen und Weiterbildungen der Erfindung sind den Unteransprüchen zu entnehmen.

Kurz zusammengefaßt besteht bei der Erfindung der Codewandler aus zwei verschiedenen Speichern. Ein Speicher (ROM) wird werksseitig auf eine Standard-Tastenbelegung programmiert und ist später nicht mehr änderbar. Der andere Speicher (EEPROM) ist dagegen frei programmierbar und kann auch frei gelöscht werden. Bei der Codeumwandlung hat er Vorrang vor dem fest programmierten Speicher. Ist also für eine bestimmte Taste in dem frei programmierbaren Speicher ein Code abgelegt, so wird nur dieser Code ausgegeben und nicht der für dieselbe Taste im fest programmierten Speicher gespeicherte Code.

Mit den Merkmalen des Anspruches 2 kann der frei programmierbare Speicher beliebig groß gemacht werden.

Mit den Merkmalen des Anspruches 3 läßt sich die "Kapazität" des der Schaltmatrix nachgeschalteten Encoders praktisch verdoppeln, wodurch auch die Möglichkeiten des frei programmierbaren Speichers besser ausgenutzt werden.

Mit den Merkmalen des Anspruches 4 lassen sich bis zu vier Befehlsebenen realisieren und damit in Verbindung mit den großen Möglichkeiten des frei programmierbaren Speichers jeder Taste bis zu vier verschiedene Befehlsfolgen zuweisen.

Mit den Merkmalen des Anspruches 5 erreicht man einen schnellen Zugriff zu den im frei programmierbaren Speicher gespeicherten Daten.

Mit den Merkmalen des Anspruches 6 läßt sich der Aufwand für den fest programmierten Speicher des Codewandlers verringern.

Mit den Merkmalen der Ansprüche 7 bis 9 wird der Speicherplatzbedarf des frei programmierbaren Speichers verringert und dadurch gleichzeitig die Zugriffsgeschwindigkeit erhöht.

Im folgenden wird die Erfindung anhand eines Ausführungsbeispiels im Zusammenhang mit der Zeichnung ausführlicher erläutert. Es zeigt:

Fig. 1 ein Blockschaltbild der Tastatur nach der Erfindung anhand einer Infrarot-Fernsteuertastatur für Btx;

Fig. 2 ein Blockschaltbild der senderseitigen Teile der Tastatur der Fig. 1;

Fig. 3 eine schematische Darstellung der 4 "Befehlsebenen", die in Fig. 2 verwendet werden;

Fig. 4 ein Diagramm zur Erläuterung der Kodierung der 4 Befehlsebenen;

Fig. 5 eine Übersicht der Bit-Belegung des senderseitigen Übertragungsformates;

Fig. 6 eine schematische Darstellung der Tastatur und der Tastenbelegung;

Fig. 7 ein detailliertes Schaltbild der senderseitigen Tastatur;

Fig. 8 ein Diagramm zur Erläuterung der Code-Bytes in den 4 Befehlsebenen;

Fig. 9 ein Diagramm zur Erläuterung des Interpreters für die Code-Bytes;

Fig. 10 ein Prinzipschaltbild des empfängerseitigen Teiles der Tastatur;

Fig. 11 ein detaillierteres Schaltbild des empfängerseitigen Converters;

Fig. 12 ein detailliertes Blockschaltbild des empfängerseitigen Teiles der Tastatur;

Fig. 13 eine Übersicht des Tabellenaufbaus des EEPROMs des empfängerseitigen Converters;

Fig. 14 eine entsprechende Übersicht des empfängerseitigen ROMs des Converters;

Fig. 15 eine entsprechende Übersicht des Aufbaus der im EEPROM gespeicherten Daten;

Fig. 16 ein Flußdiagramm zur Erläuterung der Arbeitsweise des empfängerseitigen Converters;

Fig. 17 ein Prinzipschaltbild des Interpreters der der Fig. 12; und

Fig. 18 ein Prinzipschaltbild eines Interpreterblocks für die Normbelegung.

Gleiche Bezugszeichen in den einzelnen Figuren bezeichnen gleiche bzw. einander entsprechende Teile.

Obwohl die Erfindung nachfolgend anhand einer Infrarotferngesteuerten Btx-Tastatur erläutert wird, sei darauf hingewiesen, daß sie auch auf eine "Kabeltastatur" anwendbar ist, bei der die Daten bzw. Befehle von der Tastatur über ein Kabel an einen Rechner, eine Auswerteschaltung oder ähnliches übertragen werden. Im Sinne der Erfindung werden daher auch empfänger-und senderseitige Teile als Bestandteile der "Tastatur" angesehen. Gedanklich endet die Tastatur also an der Schnittstelle, an welcher die Daten in dem gewünschten Format für die weitere Verarbeitung ausgegeben werden.

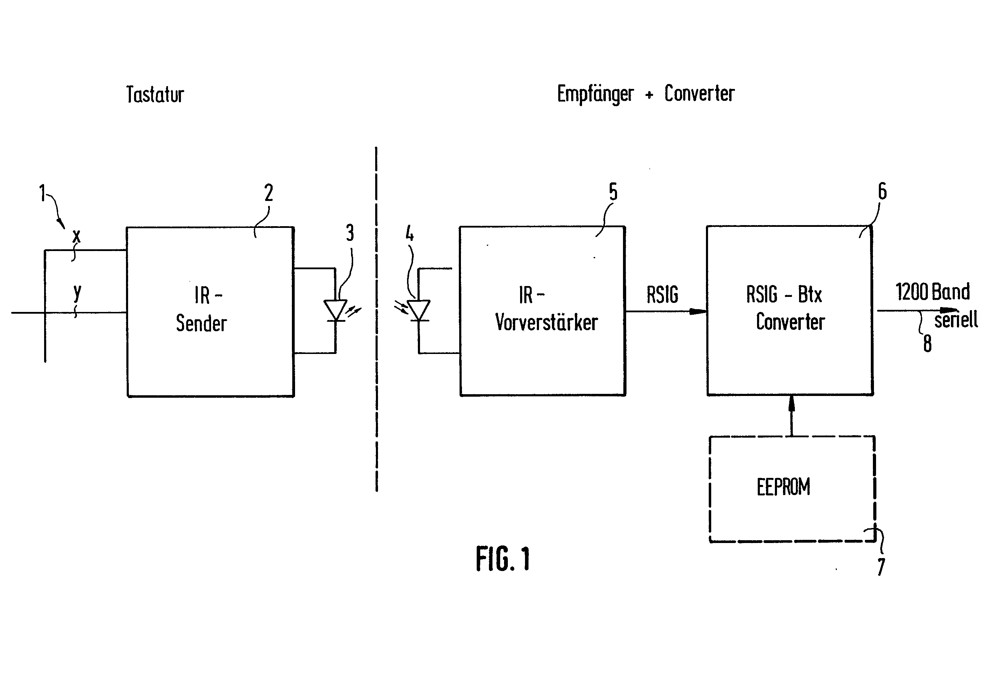

Es sei zunächst auf Fig. 1 Bezug genommen. Mit 1 ist eine herkömmliche Schaltmatrix bezeichnet. Durch Drücken bestimmter Tasten der Tastatur werden zugeordnete x-und y-Leitungen der Schaltmatrix elektrisch miteinander verbunden. In einer im Infrarotsender 2 enthaltenen Auswerteschaltung werden diese Leitungen zyklisch abgefragt und in senderseitige Bit-Folgen umgewandelt, die seriell über eine Infrarotdiode 3 ausgesandt werden. Empfängerseitig werden diese Bit-Folgen an einer lichtempfindlichen Diode 4 empfangen, in einem Infrarot-Vorverstärker 5 verstärkt und gegebenenfalls in bekannter Weise zu digitalen Impulsen mit - scharfen Flanken aufbereitet und dann in einem Converter 6, der zusätzlich nach der Erfindung ein EEPROM 7 enthält, zu dem gewünschten Ausgangscode umgeformt, welcher dann an einer seriellen Schnittstelle 8 ausgegeben wird. Das EEPROM 7 ist ein elektrisch löschbarer, programmierbarer Nur-Lese-Speicher (Electrical Erasable Programmäble Read-Only Memory). Dieses EEPROM macht es -wie nachfolgend verständlich wird - möglich, die Tastenbelegung frei zu ändern und zwar insbesondere auch durch den Endanwender der Tastatur.

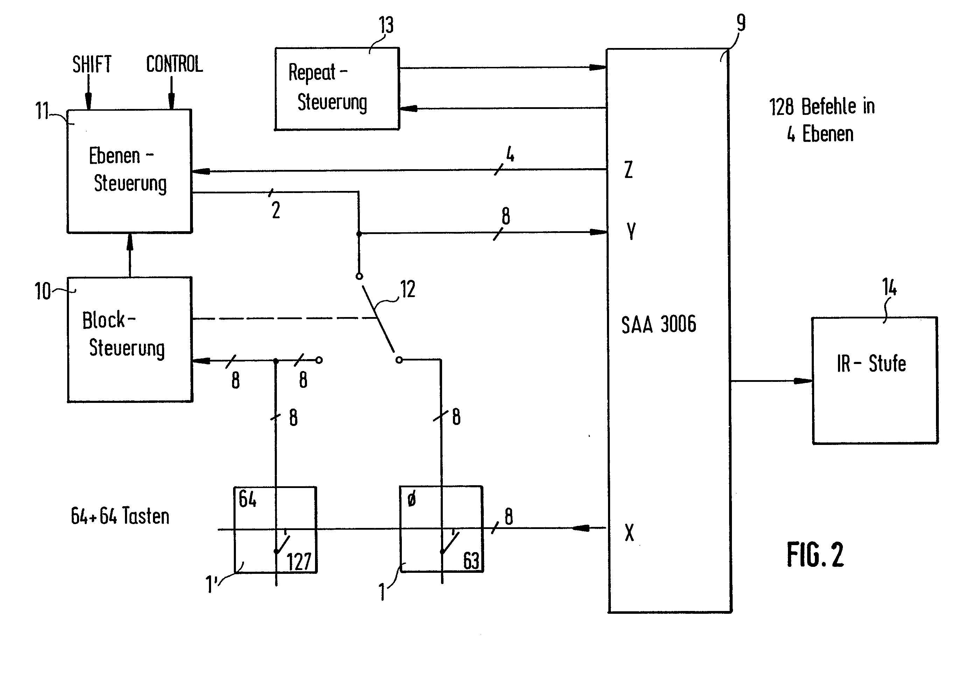

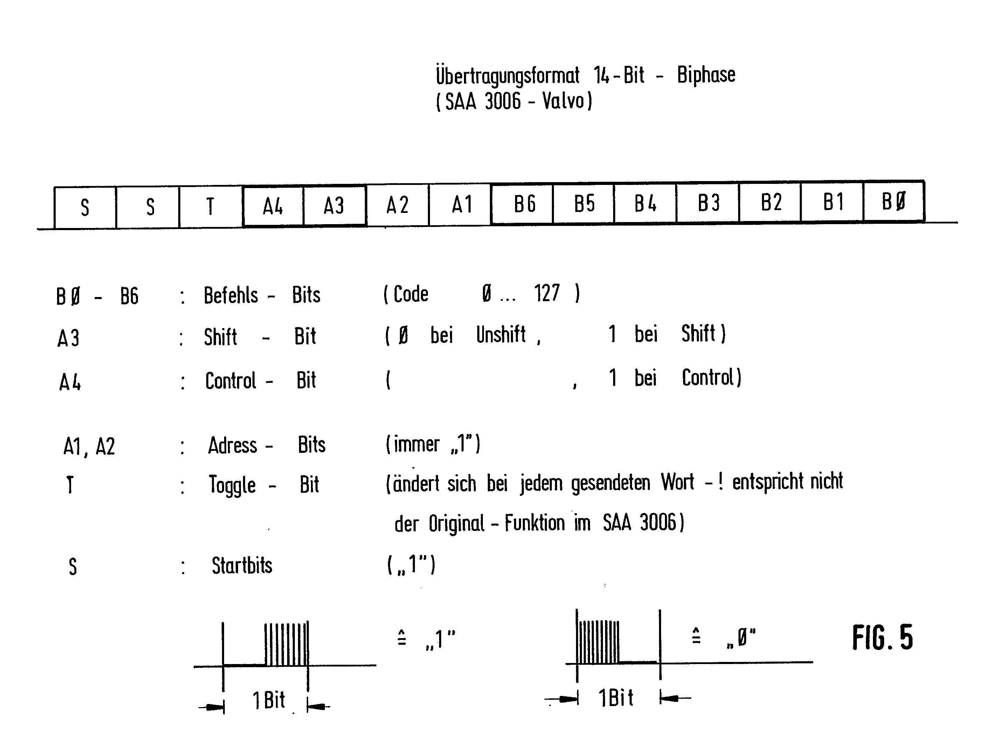

Fig. 2 zeigt detailliert ein Blockschaltbild der senderseitigen Tastatur. Kernstück dieses Ausführungsbeispiels ist ein Standard-Fernbedien-Baustein des Typs SAA 3006 der Firma VALVO, der mit den Bezugszeichen 9 bezeichnet ist. Es können natürlich auch Bausteine anderen Typs verwendet werden. Dieser Baustein ist in seiner Standardversion für 6 Befehls-und 5 Adressbits ausgelegt. Bei der Erfindung wurde nun der Adressebene ein Bit entzogen und der Befehlsebene zugewiesen, so daß jetzt 7 Befehlsbits (Bits B0 bis B6 in Fig. 5) und 4 Adressbits (Bits A1 bis A4; Fig. 5) zur Auswahl stehen. Hardwaremäßig erfolgt dies über eine Blocksteuerung 10 in Verbindung mit einer Ebenensteuerung 11. Damit erhält man eine Verdoppelung der möglichen Befehlssätze.

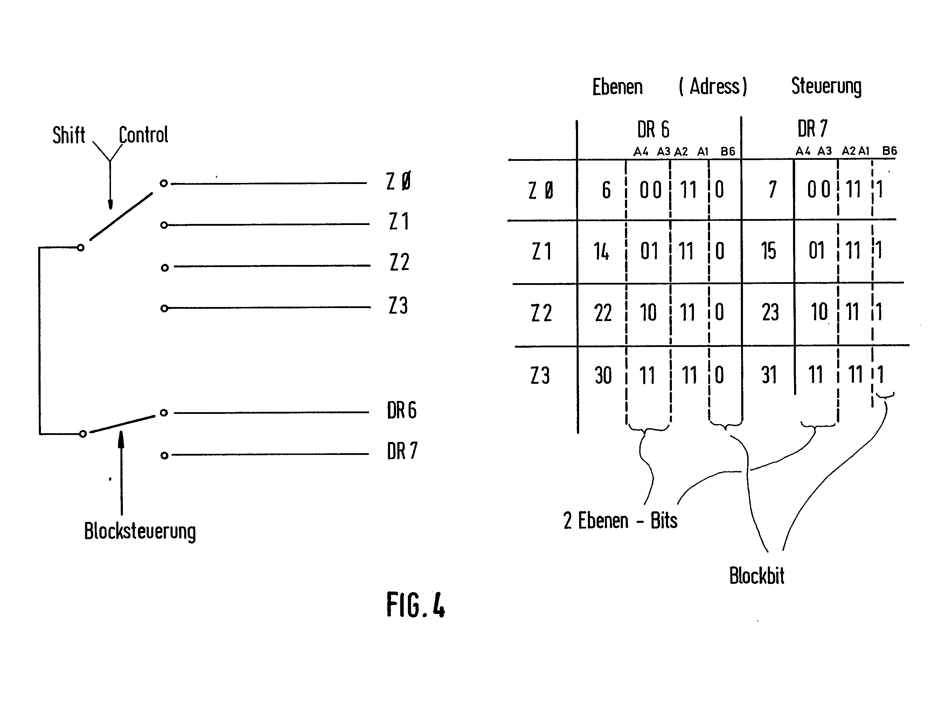

Bei dem Ausführungsbeispiel der Fig. 2 hat die Schaltmatrix zweimal 64 Schaltpunkte - (Tastengruppen 1 und 1') und entsprechend also 128 Tasten. Diese Schaltpunkte sind in zwei verschiedene "Blockebenen" unterteilt. Mittels eines von der Blocksteuerung 10 gesteuerten Schalters 12, der bei 64 Tasten pro Blockebene ein 8-poliger Schalter ist, wird in Verbindung mit der Ebenensteuerung 11 die entsprechende "Blockebene" angewählt. Die Ebenensteuerung 11 wird durch 2 separate Schalter "Shift" und "Control" angesteuert (vgl. Fig.4). Es ergeben sich damit für die Tasten "Shift" und "Control" 4 mögliche Kombinationen entsprechend den Befehlsbit-Kombinationen der Befehlsbits A3 und A4 der Fig. 5. Die beiden "Blockebenen" sind hierarchisch geordnet. Wird eine Taste der vorrangigen "Blockebene" gedrückt, so wird der Schalter 12 in Verbindung mit der Ebenensteuerung 11 umgeschaltet. Je nach Schalterstellung erscheint dann ein "Blockbit".

Ausgewählten Tasten kann eine automatische Befehlswiederholung zugewiesen werden, mit der Folge, daß bei konstantem Drücken der Taste der entsprechende Befehlssatz laufend wiederholt wird. Dies erfolgt über eine Repeat-Steuerung 13. Sie ermöglicht auch eine Erhöhung der Senderate. Wenn ein kompletter Datensatz ausgesandt wurde, was ca. 30 ms dauert, wird eine gleichlange Pause eingefügt, wonach dann das Wort erneut ausgesandt werden kann. Die Repeat-Steuerung 13 enthält im Prinzip ein nachtriggerbares Monoflop. Falls dieselbe Taste noch gedrückt ist, wird das Wort wiederholt. Falls bereits eine andere Taste gedrückt ist, wird das neue Wort ausgesandt. Wird von der Repeat-Steuerung auf den entsprechenden Eingang des Fernbedienbausteines 9 ein Signal mit logischem Pegel 1 übermittelt, so startet dieser Baustein 9 vorzeitig neu die Abfrage seiner Eingänge, was sonst - je nach Taktfrequenz -erst beispielsweise nach 90 ms erfolgen würde.

Der Ausgang des Fernbedienbausteines 9 ist mit einer Infrarot-Sendestufe 14 verbunden, welche auch die Leuchtdiode 3 (Fig. 1) enthält.

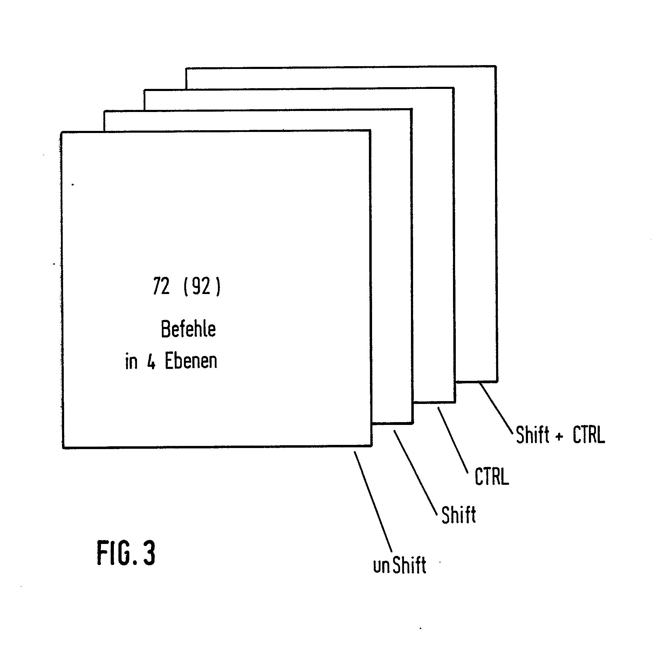

Fig. 3 verdeutlicht die 4 Befehlsebenen. Die erste Befehlsebene ist dadurch definiert, daß beide Tasten "Shift" und "Control" nicht gedrückt sind. Bei der zweiten Befehlsebene ist nur die Taste "Shift" gedrückt. Bei der dritten Befehlsebene ist nur die Taste "Control" gedrückt. Bei der vierten Befehlsebene sind schließlich beide Tasten "Shift" und "Control" gedrückt.

In Fig. 4 sind die vier Befehlsebenen mit Z0, Z1, Z2 und Z3 bezeichnet. Der Fig. 4 rechts stehenden Tabelle ist zu entnehmen, wie sich bei den möglichen Kombinationen der Tasten "Shift" und "Control" die "Ebenen-Bits" A4 und A3 (Fig. 5) ändern. Das Blockbit B6 ändert seinen Wert entsprechend der Stellung des Schalters 12.

Fig. 5 zeigt nun einen kompletten Befehlssatz. Die Bits B0 bis B6 sind die Befehlsbits, wobei die Bits B0 bis B5 entsprechend der Codierung der Schaltmatrix 1 oder 1' erfolgt, während das Bit B6 das Blockbit ist. Die Adressbits A1 bis A4 sind wie folgt aufgeteilt:

Die Adressbits A1 und A2 sind ständig auf einer logischen "1" und werden lediglich zu Kontrollzwecken verwendet. Die Bits A3 und A4 sind die Ebenen-Bits. Das Bit A3 ist der Taste "Shift" und das Bit A4 der Taste "Control" zugewiesen. Ein weiteres Bit T ist mit "Toggle-Bit" bezeichnet. Es ändert sich nach jedem gesendeten Wort und entspricht nicht der Originalfunktion des Fernbedienbausteines 9 des Typs SAA 3006, da bei dem Ausführungsbeispiel der Erfindung noch eine Rücksetzfunktion vorgesehen ist. Die beiden verbleibenden Bits S sind "Startbits", die zum Erkennen des Beginns eines neuen Wortes ausgenutzt werden.

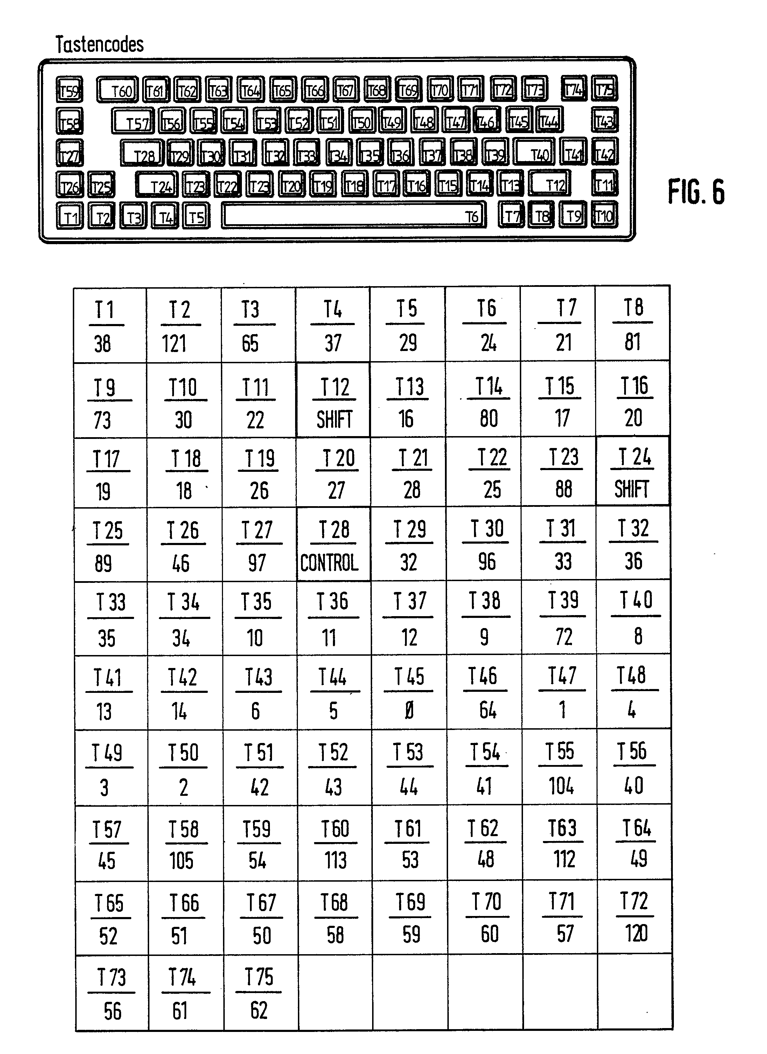

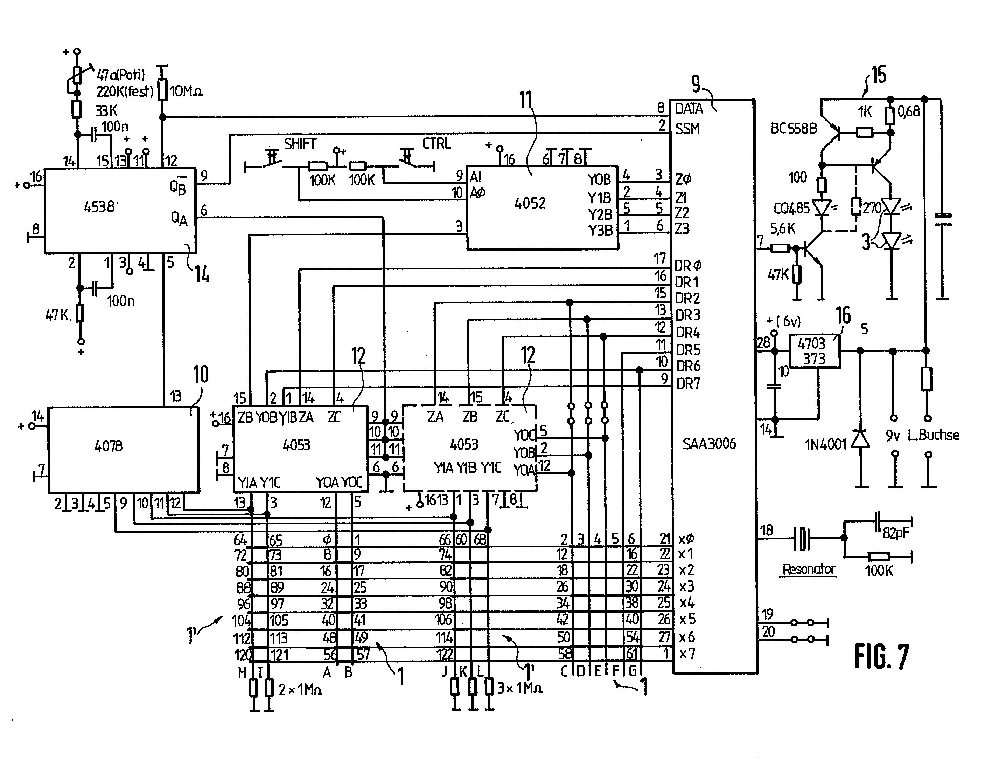

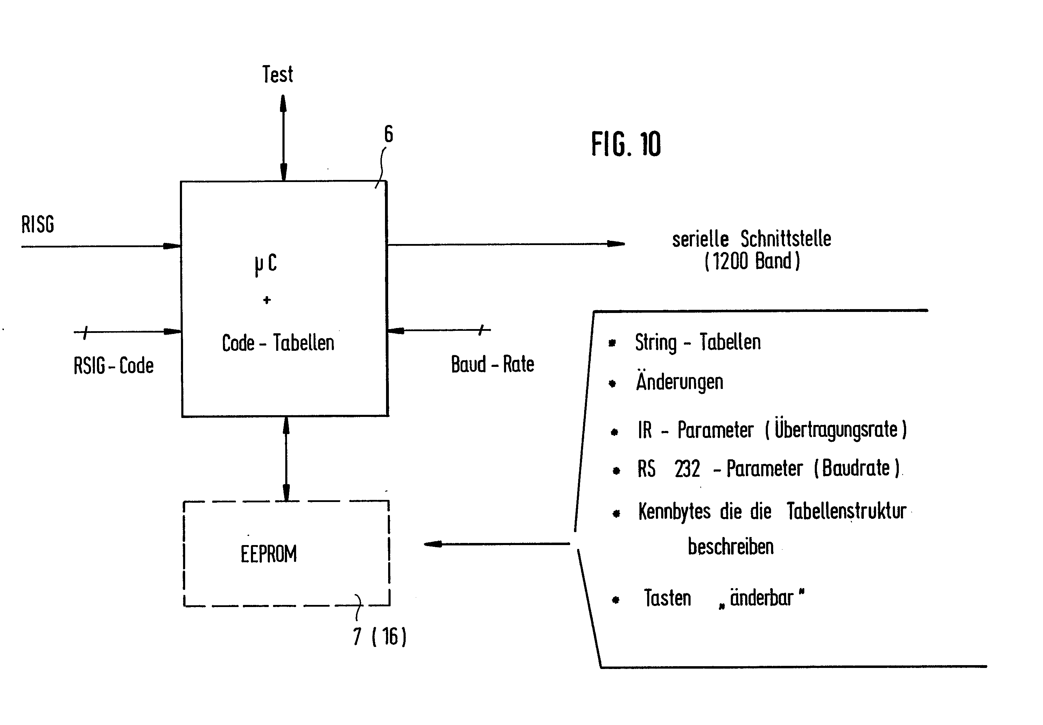

Fig. 6 zeigt eine Draufsicht der Tastatur mit den Tasten T1 bis T75 sowie in der darunter angeordneten Tabelle die Zuweisung der dezimalen Werte zu den einzelnen Tasten entsprechend der Schaltmatrix 1. Den Tasten T12 und T 24 ist hierbei die Funktion "Shift" zugewiesen, während der Taste T 28 die Funktion "Control" zugewiesen ist. Die dezimalen Werte 7, 15, 23, 31, 39, 55 und 63 sind in diesem Ausführungsbeispiel keiner Taste zugewiesen, um mögliche Fehler bei einer gleichzeitigen Betätigung von zwei Tasten (mit Ausnahme von "Shift" und "Control") zu vermeiden. Bei dem Fern bedienbaustein des Typs SAA 3006 wird im vorliegenden Beispiel die Ebenensteuerung mittels der Eingänge DR6 und DR7 (Fig. 7) durchgeführt. Der Eingang DR7 hat bei diesem Baustein Vorrang vor dem Eingang DR6, so daß bei belegtem Eingang DR7 unterschiedliche Zustände des Einganges DR6 nicht erkannt werden können. Solche Zustände treten genau bei den Dezimalzahlen 7, 15, 23, 31, 39, 55 und 63 aus. Von den verbleibenden Tasten sind diejenigen mit den dezimalen Werten von 0 bis 62 der einen Blockebene zugewiesen, während der Rest der anderen Blockebene zugewiesen ist. Wird eine der letztgenannten Tasten gedrückt, so wird dies von der Blocksteuerung 10 (Fig. 10) erkannt, worauf der Schalter 12 (Fig.2) umgeschaltet wird.

Fig. 7 zeigt ein detailliertes Schaltbild der senderseitigen Tastatur in einer konkret realisierten Ausführungsform.

Die Schaltmatrix ist hier in die beiden Blöcke 1 und 1' unterteilt. Der Block 1 ist der ersten Blockebene zugewiesen; der Block 1' der zweiten Blockebene. Wird eine Taste der ersten Blockebene gedrückt, so wird zwischen einem der Anschlüsse X0 bis X7 und einem der Anschlüsse DR0 bis DR6 des Fernbedienbausteines 9 eine elektrische Verbindung hergestellt, worauf der Fernbedienbaustein 9 in bestimmungsgemäßer Weise mit seiner Arbeit beginnt. Wird dagegen eine Taste der Schaltmatrix 1' gedrückt, d. h. eine der zweiten Blockebene zugeordnete Taste, so wird dies von der Blocksteuerung 10 und zwar dem Baustein 4078 durch eine Potentialänderung an einem seiner Eingänge von "L" auf "H" erkannt. Solange nämlich keine Taste des zweiten Blocks gedrückt ist, liegt das Potential der senkrecht in Fig. 7 verlaufenden Leitungen aufgrund der der Schaltmatrix 1' zugeordneten Widerstände auf "L". Am Ausgang der Blocksteuerung 10 erscheint damit ein Signal, das ein monostabiles Flipflop (Baustein des Typs 4538) durchtriggert, welches wiederum über seinen Ausgang $Q_A$ die Schalter 12 umschaltet, womit auch das Blockbit B6 gesetzt wird. Dieses Setzen des Blockbits geschieht im Fernbedienbaustein 9. Dieser prüft nämlich, welcher der Anschlüsse Z0 bis Z3 mit welchem der Anschlüsse DR0 bis DR7 verbunden ist.

Die Ebenensteuerung der Fig. 7 enthält einen Vierfach-Analog-Schalter, der je nach Kombination der Tasten "Shift" und "Control" auf einen seiner Ausgänge $Y_{0B}$ bis $Y_{3B}$ ein Signal ausgibt, das dem zugeordneten Eingang Z0 bis Z3 des Fernbedienbausteines 9 zugeführt wird. Die vier Leitungen sind auch in Fig. 2 und Fig. 4 dargestellt. Am Ausgang 7 des Fernbedienbausteines 9 erscheint dann die in Fig. 5 dargestellte Bitfolge, die über eine Verstärkerstufe 15 der Leuchtdiode 3 zugeführt wird. Mit 16 ist noch eine Stromversorgung für den Fernbedienbaustein 9 bezeichnet. Die externe Beschaltung der in Fig. 7 dargestellten integrierten Schaltkreise ergibt sich ohne weiteres aus dem Schaltbild und bedarf keiner näheren Erläuterung.

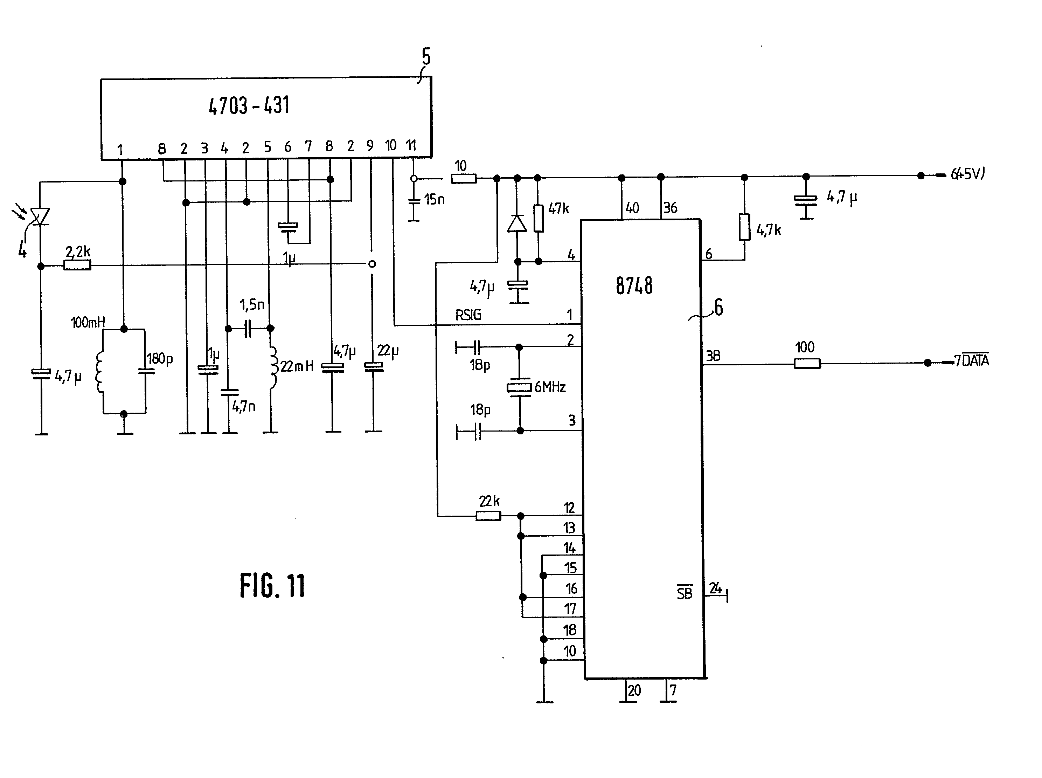

Das von der Leuchtdiode 3 ausgesandte Signal mit der Bitfolge gemäß Fig. 5 wird von der lichtempfindlichen Diode 4 (Fig. 1 und Fig. 11) empfangen und in dem Infrarot-Vorverstärker 5 (Fig. 1 und Fig. 11) zu einem Signal "RSIG" (Remote-Signal) aufbereitet. Dieses Signal wird dem Converter 6 (Fig. 1, 10 und 11) zugeführt. Dieser Converter besteht aus einem Mikroprozessor des Typs 8748 (es ist jedoch auch jeder andere Mikroprozessor verwendbar, beispielsweise auch der des Typs 8048), welcher auch einen Nur-Lese-Speicher (im folgenden ROM genannt) enthält. Zusätzlich ist - wie aus Fig. 10 zu erkennen -an den Mikroprozessor 6 ein EEPROM 16 angeschlossen. Der Ausgang des Mikroprozessors ist hier eine serielle Schnittstelle mit den Ausgang "DATA" (Fig. 11). Die externe Beschaltung der Bausteine ergibt sich aus Fig. 11 und bedarf keiner näheren Erläuterung.

Am Eingang des Mikroprozessors 6 steht das Signal RSIG an, das der in Fig. 5 gezeigten Bitfolge mit insgesamt 14 Bits entspricht. Dieses Signal entspricht einem hardwaremäßig festgelegtem Code, der eine eindeutig definierte Taste der Tastatur bezeichnet (oder, wenn "Shift" und/oder "Control" zusammen mit einer anderen Taste gedrückt sind, eine eindeutig definierte Tastenkombination. Das gleichzeitige Drücken von zwei oder mehreren Tasten mit Ausnahme des Drückens einer Taste in Kombination mit den Tasten "Shift" und "Control" wird vom Fernbedienbaustein als "verbotene Kombination" angesehen). Jede Taste oder Tastenkombination kann daher auch als "Befehl" bezeichnet werden. Bei den in Fig. 2 dargestellten zweimal 64 Tasten und den über "Shift" und "Control" auswählbaren vier Ebenen erhält man mit dem Fernbedienbaustein 9 des Typs SAA 3006 also maximal $4 \times 2 \times 64 = 512$ mögliche Befehle. Bei der in Fig. 6 dargestellten Tastatur mit insgesamt 75 Tasten (72 Tasten und den Tasten "Control" und zwei mal "Shift") sind also $4 \times 72 = 288$ Befehle möglich (die zweifach vorhandene Taste "Shift" und die Taste "Control" können im vorliegenden Sinne nicht als Befehle aufgefaßt werden).

Wie in der Beschreibungseinleitung erwähnt, wird in der Praxis nahezu für jeden Anwendungsfall eine kundenspezifische Tastenbelegung (Zuordnung einer Befehlsfolge zu einer bestimmten Taste) gefordert. (In den meisten Anwendungsfällen ist zwar die Grundbelegung der sog. Alpha-Tastatur gleich, nicht jedoch für die sonstigen Steuer-und Befehlstasten).Dabei wird oftmals auch gefordert, daß den einzelnen Tasten unterschiedlich lange Befehlsfolgen zugewiesen werden. Dies geht von einem Einzel-Byte bis zu einem "string", der mehrere Bytes enthält. Eine starre Belegung, die jeder Taste ein oder zwei Bytes zuordnet, kann daher keine strings erzeugen. Andererseits würde es eine Vergeudung von Speicherplatz bedeuten, wenn man für jede Taste mehrere Bytes reservieren würde, da die gewünschten "Strings" ja durchaus unterschiedlich lang sein können und beispielsweise auch für viele Tasten, wie z.B. für die alpha-numerischen Tasten nur ein Byte benötigt wird.

Nach der Erfindung ist daher für die Codeumwandlung der Bitfolge des Signales RSIG eine sequentielle Tabelle vorgesehen, die den Matrixcode, die Anzahl der zugeordneten Codes und die Codes von 0 bis n Bytes beinhaltet. Diese "Tabelle" ist ihrerseits in zwei Teil-Tabellen unterteilt. Die eine ist dabei in einem ROM (Nur-Lese-Speicher), der Bestandteil des Mikroprozessors 6 ist, abgespeichert, während die andere Teil-Tabelle in dem EEPROM 16 gespeichert ist. Das ROM ist dabei maskenprogrammiert und kann nach seiner Programmierung nicht mehr geändert werden. Bei der Herstellung kleinerer Stückzahlen einer Tastatur ist es aus Kostengründen abzulehnen, für jede kundenspezifische Tastenbelegung eine neue Maske anzufertigen. Auch ist eine nach trägliche Änderung der Tastenbelegung durch den Kunden nicht möglich. Aus diesem Grunde ist der elektrisch löschbare programmierbare Nur-Lese-Speicher, d. h. das EEPROM 16 vorgesehen, mit dem Änderungen leicht vorgenommen werden können.

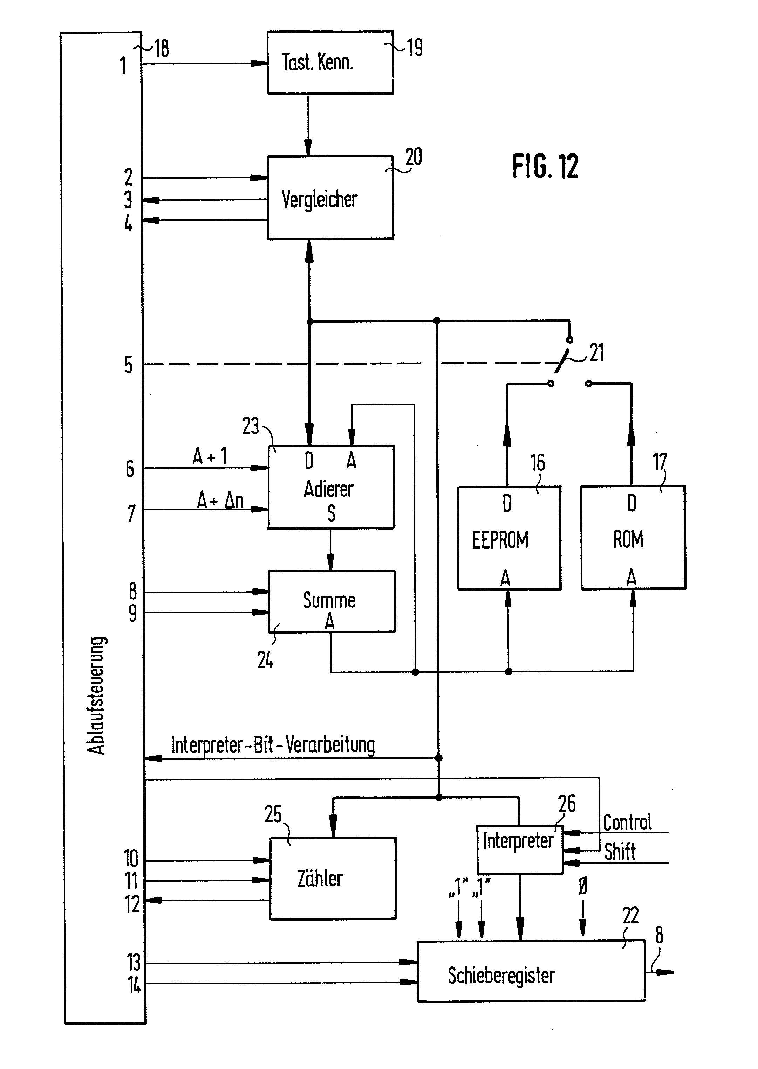

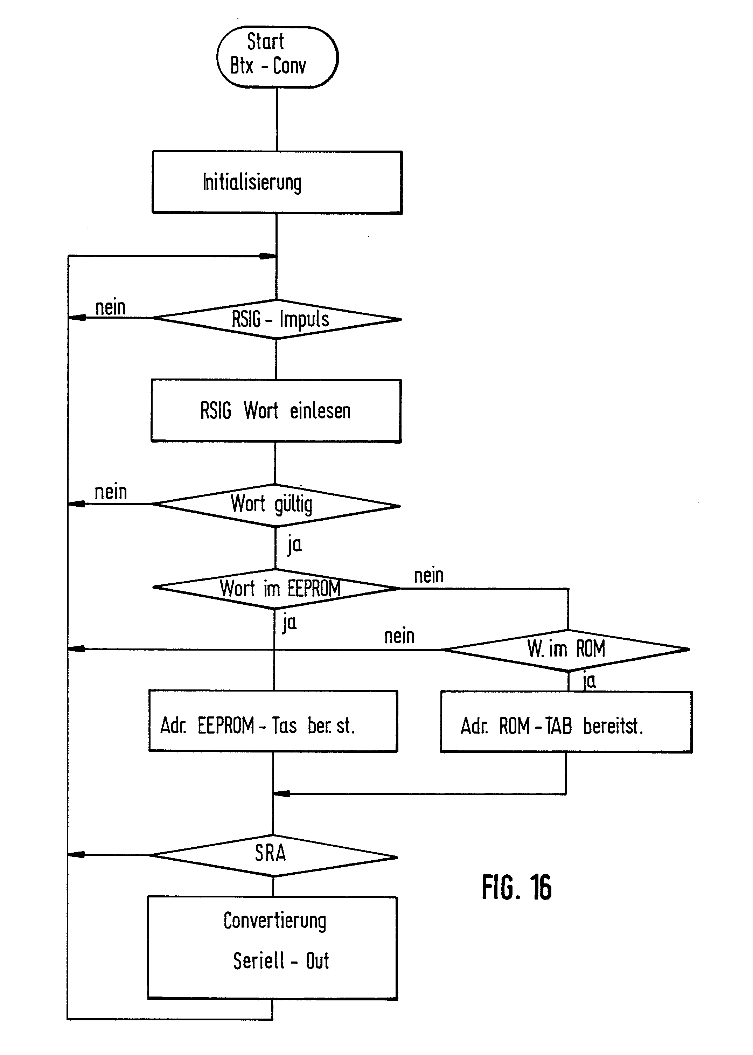

Das ROM enthält somit eine feste, vom Hersteller der Tastatur gewählte Codierung, während das EEPROM 16 eine variable, auch vom Benutzer änderbare Codierung enthält. Prinzipiell kann das ROM eine komplette Grundcodierung für alle Tasten haben, während das EEPROM nur eine Tabelle enthält, die Abweichungen gegenüber der Grundcodierung beinhaltet. Dementsprechend sind das EEPROM und das ROM hierarchisch gegliedert, in der Weise, daß das EEPROM Vorrang vor dem ROM hat. Wie nachfolgend im Zusammenhang mit den Fig. 12 und 16 noch ausführlicher erläutert wird, wird zunächst im EEPROM abgefragt, ob für die spezielle Taste eine Codierung dort abgelegt ist. Wird dort keine Codierung gefunden, so wird erst dann das ROM abgefragt. Da das EEPROM frei programmierbar ist, kann den einzelnen Tasten eine beliebig lange Codierung bis hin zu längeren Strings zugewiesen werden.

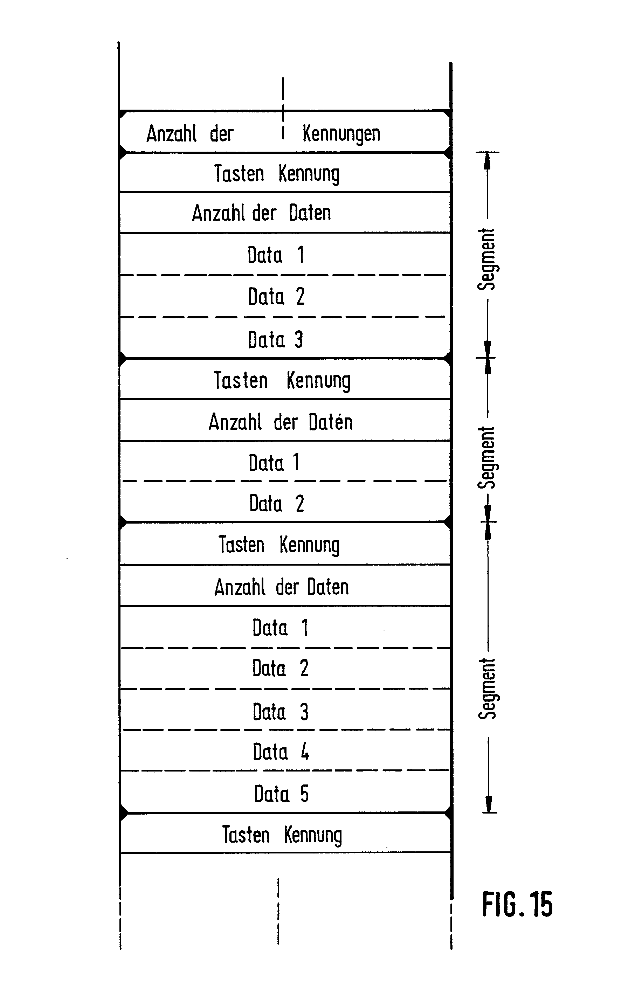

Fig. 15 zeigt den grundsätzlichen Tabellenaufbau, der sowohl im EEPROM als auch im ROM verwendet werden kann. Die Tabelle ist in mehrere Segmente unterteilt, wobei jedes Segment einer bestimmten Taste bzw. unter Berücksichtigung der vier Befehlsebenen, die mittels "shift" und "control" angesteuert werden können, einer bestimmten Tastenkombination zugeordnet ist. Jedes Segment beginnt mit einer "Tastenkennung", die einem Teil der Bitfolge gemäß Fig. 5 entspricht. Diese Bitfolge wird hier also als "Adresse" für das zugeordnete Segment behandelt. Weiter enthält jedes Segment die Anzahl der gespeicherten Daten und schließlich die gespeicherten Daten selbst, die unterschiedliche Länge haben können.

Um das einer Taste zugeordnete Tabellensegment zu finden, muß der Matrixcode (Bitfolge gemäß Fig. 5) mit dem ersten Byte (Byte : "Tastenkennung") des Tabellensegmentes verglichen werden. Ist keine Gleichheit vorhanden, wird die Adresse des nächsten Matrix-Code-Bytes, also die Tastenkennung des nächsten Segmentes errechnet, was über das Feld "Anzahl der Daten" erfolgt. Hierüber kennt man die Länge jedes Segmentes, so daß die Adresse des nächst folgenden Segmentes errechenbar ist. Dieser Vorgang wird solange wiederholt, bis das Tabellensegment mit der passenden Tastenkennung gefunden wird. Die jeweils nächste Adresse eines Segmentes ergibt sich aus gegenwärtiger Adresse plus der Anzahl der Datenbytes plus zwei.

Zusätzlich enthält die Tabelle der Fig. 15 zu Beginn noch ein Feld, das die Anzahl der Kennungen bezeichnet.

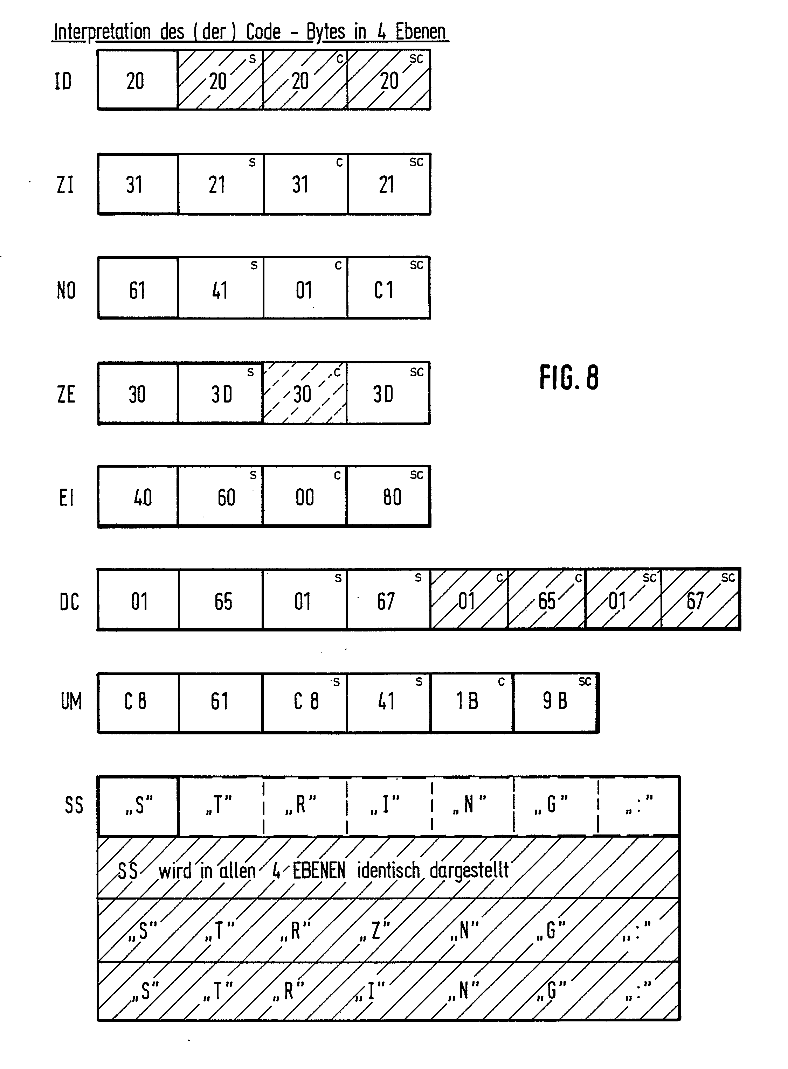

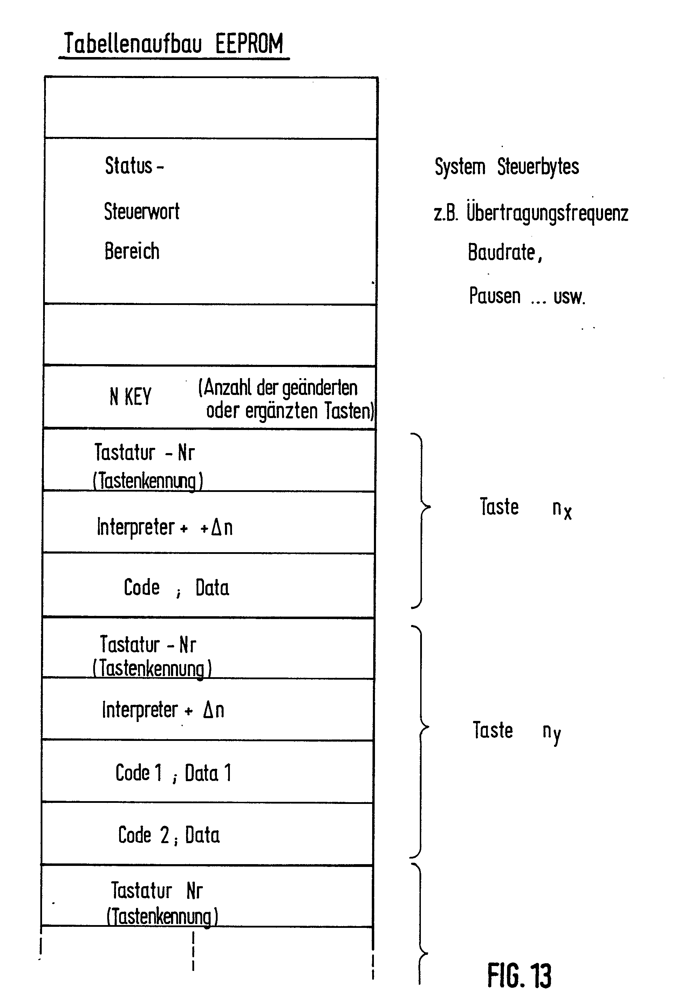

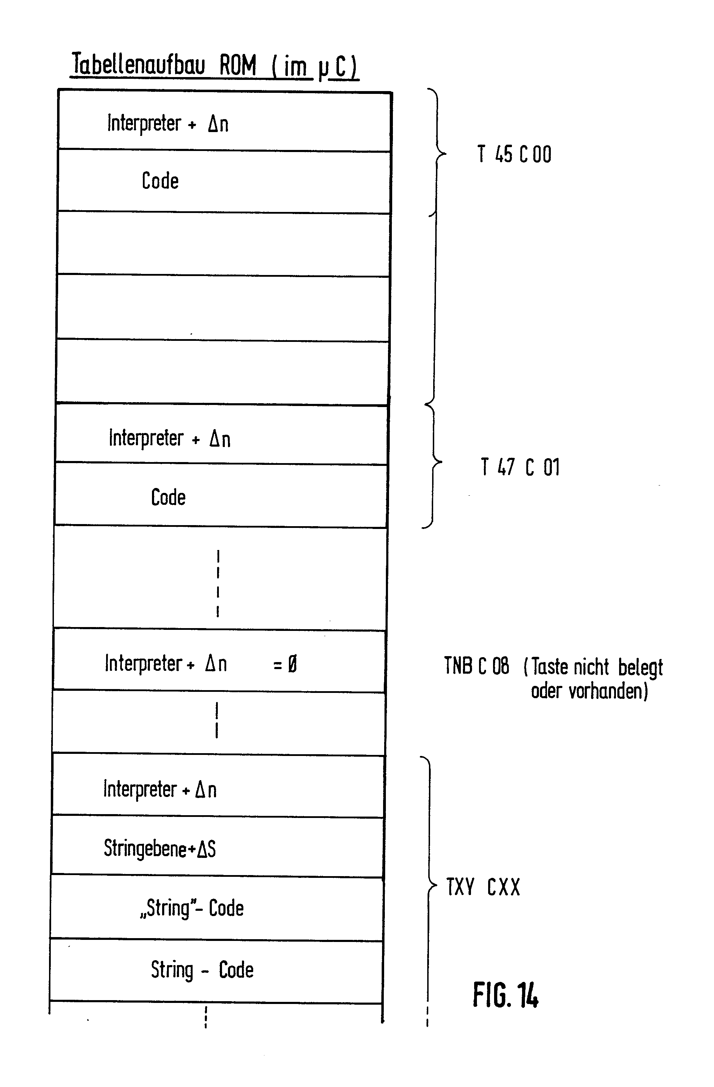

Die Fig. 13 und 14 zeigen nun den speziellen Aufbau der Tabellen des EEPROMs und des ROMs, wobei sich gegenüber dem grundsätzlichen Tabellenaufbau der Fig. 15 gewisse Abweichungen ergeben. Der Tabellenaufbau des EEPROMs gemäß Fig. 13 enthält eingangs einen Status-Steuerwortbereich mit Steuerbytes für beispielsweise die Übertragungsfrequenz, die Baudrate, Pausen etc. Darauf folgt der Bereich, der die Anzahl der Kennungen enthält und damit die Anzahl der geänderten oder ergänzten Tasten bezeichnet. Danach folgen die einzelnen Segmente, die jeweils einer Taste bzw. Tastenkombination zugeordnet sind. Danach folgt ein Feld für die Anzahl der Daten, das hier mit "Interpreter plus $\Delta$ n" bezeichnet ist. Hieraus läßt sich die Adresse der Tastenkennung des nächst folgenden Segmentes errechnen. Der Wert " $\Delta$ n" gibt dabei an, wie viele Daten in dem jeweiligen Segment abgelegt sind und bezeichnet damit die Länge des einzelnen Segmentes. Darauf folgen entsprechend Fig. 15 -die einzelnen zugeordneten Codes bzw. Daten. Der mit "Interpreter" bezeichnete Feldteil wird weiter unten im Zusammenhang mit den Fig. 8 und 9 sowie den Fig. 17 und 18 erläutert.

Die Tabelle des ROMs kann im Prinzip gleich aufgebaut sein wie die Tabelle des EEPROMs gemäß Fig. 13. Da das in dem Mikroprozessor 6 des Typs 8748 verwendete ROM jedoch nur eine verhältnismäßig kleine Speicherzahl hat, wurde zur Einsparung von benötigtem Speicherplatz eine gewisse Modifikation vorgenommen, die aus Fig. 14 ersichtlich ist. Es wurde nämlich für jedes Segment die Tastenkennung fortgelassen. Das erste Feld jedes Segmentes ist damit das Feld

"Interpreter + $\Delta$ n". Seine Adresse wird von einem eigenen, im Mikroprozessor enthaltenen Zähler (25 in Fig. 12) errechnet. Dieser Zähler startet mit dem Wert "00". Dies entspräche gemäß Fig. 6 der Taste T45, welcher der dezimale Code "00" zugewiesen ist. Der Code "01" ist der Taste T47 zugewiesen, usw. Es wird also der Zählerstand dieses internen Zählers mit den Bytes B0 bis B6 gemäß Fig. 5 verglichen, woraus man dann zusammen mit dem $\Delta$ n die Adresse des nächst folgenden Segmentes erhält. Dieser Vergleich des Zählerstandes des Zählers 25 mit den Bytes B0 bis B6 erfolgt im Vergleicher 20 (Fig. 12). In Fig. 12 erfolgt die Übermittlung des Zählerstandes zu dem Vergleicher über die Ablaufsteuerung 18. Der Zähler zählt Impulse aus der Ablaufsteuerung und zwar pro Segment immer einen Impuls. Der Addierer 23 der Fig. 12 summiert daher nur die $\Delta$ n auf. In den einzelnen Segmenten der Fig. 14 sind dann wieder die entsprechenden Codes abgelegt.

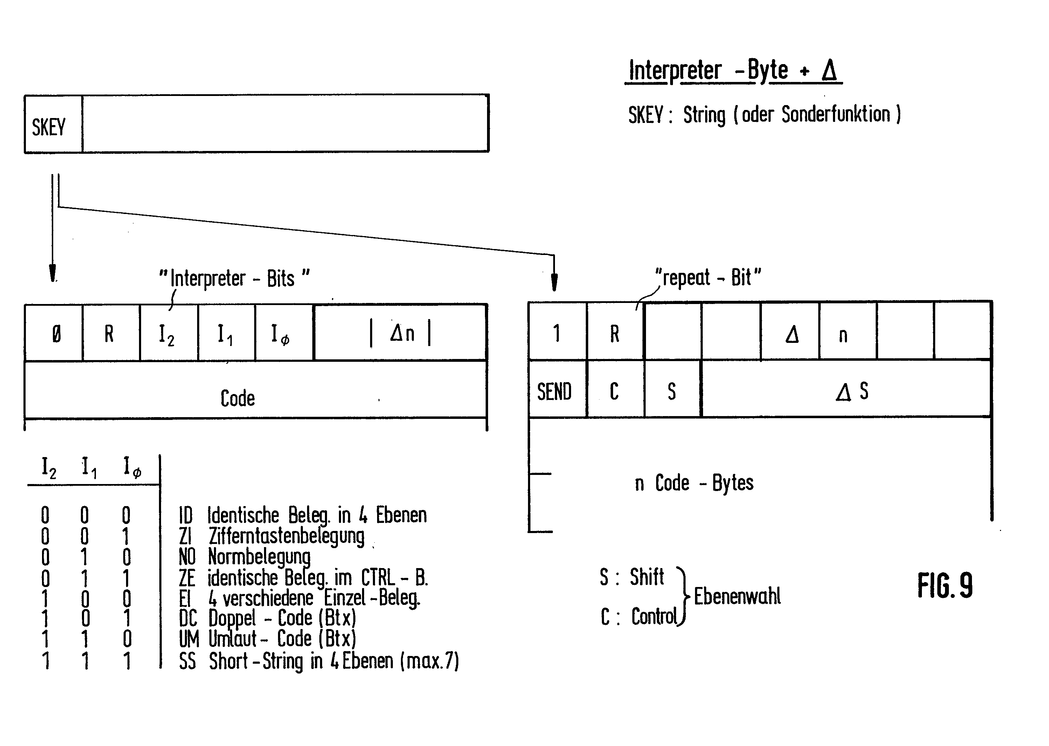

Im folgenden wird der in den Fig. 13 und 14 mit "Interpreter" bezeichnete Tabellenteil im Zusammenhang mit den Fig. 8 und 9 erläutert. Zunächst sei daran erinnert, daß jede Taste eindeutig durch die Bytes B0 bis B6 gemäß Fig. 5 identifiziert ist. Über die Tasten "Shift" und "Control" und damit die Bytes A3 und A4 der Fig. 5 wird der einzelnen Taste, je nachdem, ob eine oder beide Tasten "Shift" und "Control" gedrückt sind oder nicht, im Einzelfall ein anderer Code zugewiesen. Hier sind nun verschiedene Varianten zu unterscheiden. In Fig. 8 sind acht verschiedene Varianten der Belegung dargestellt, die folgendes bedeuten:

ID: Die entsprechenden Tasten sind in allen vier Ebenen (gemäß Fig. 3) mit einem identischen Code belegt, was durch die unterlegte Schraffur hervorgehoben ist;

ZI: Es handelt sich um eine "Zifferntastenbelegung", bei der die jeweilige Taste in der Grundebene und der Controlebene mit einem Code und in der "Shift"-und der "Shift/Control"-Ebene mit einem anderen Code belegt ist;

NO: Es handelt sich um die Normbelegung;

ZE: Diese Belegung ist invariant gegenüber der Taste "Control"; es wird also lediglich unterschieden, ob "Shift" gedrückt ist oder nicht;

EI: In allen vier Ebenen ist die Belegung verschieden;

DC: Es handelt sich um eine Doppel-Code-Belegung mit zwei mal zwei Bytes, die in ihrer Gesamtheit ähnlich wie bei der Belegung ZE gegenüber "Control" invariant sind. Beim Drücken-einer Taste wird also der Doppelcode ausgegeben;

UM: Es handelt sich um die Bezeichnung eines Umlautcodes; und

SS: Hier ist eine "Short-String"-Belegung bezeichnet, bei der in allen vier Ebenen ein identischer String ausgegeben wird.

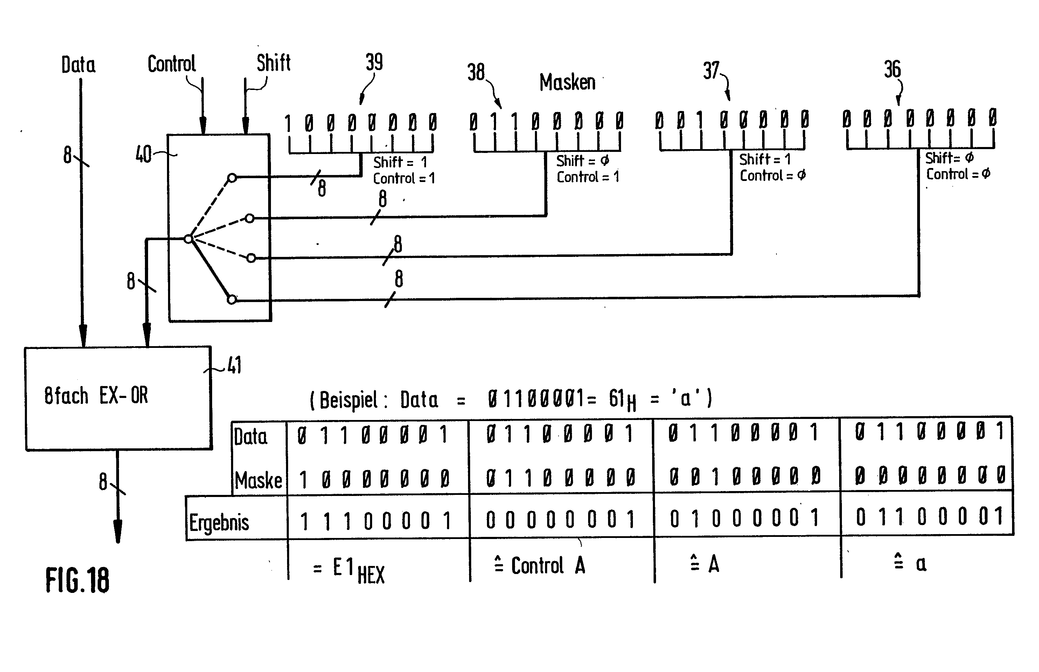

Diese acht verschiedenen Varianten sind nun mit den "Interpreterbits" mit den Bits $I0$, $I1$ und $I2$ gemäß Fig. 9 zu identifizieren. Die entsprechende Tabelle ist in Fig. 9 links unten angegeben. Sind nun einige oder bei "ID" sogar alle Codes in den vier Ebenen gleich, so genügt es, in dem jeweiligen Segment nur die voneinander in den vier Ebenen abweichenden Codes abzuspeichern, während die in verschiedenen Ebenen gleichen Codes nicht wiederholt werden müssen, wodurch beträchtlicher Speicherplatz eingespart werden kann. Weiterhin kann bei einigen Codes, selbst wenn die Belegung in den einzelnen Ebenen verschieden ist, in einer Logikschaltung eine Umrechnung des Codes einer Grundebene in die Codes einer anderen Ebene durchgeführt werden, was im Zusammenhang mit Fig. 18 detailierter erläutert wird. Auch in diesem Fall muß also nicht für unterschiedliche Codes jeweils ein eigener Speicherplatz vorgesehen sein. Über den "Interpreter" wird also festgelegt, welcher der in dem entsprechenden Segment abgelegte Code ausgelesen werden soll. Hierzu werden dann auch die Bits A3 und A4 (Fig. 5) herangezogen, welche die Befehlsebene auswählen. Steht der Interpreter eines Segmentes auf "000" so enthält das Datenfeld dieses Segmentes nur einen Code, der unabhängig von dem Wert der Bits A3 und A4 ausgelesen wird. Stehen dagegen die Bits $I0$ bis $I2$ auf dem Code "EI" (100) (Fig. 9) so wird über die Bits A3 und A4 ausgewählt, ob der Code 1, Code 2, Code 3 oder Code 4 des entsprechenden Segmentes ausgelesen wird.

In Ergänzung der obigen Erläuterung der Fig. 15 sei noch hervorgehoben, daß bei dem Vergleich der Tastenkennung der Tabelle also nur die Bits B0 bis B6 verglichen werden. Zeigt dieser Vergleich keine Übereinstimmung, so wird der Interpreter durch eine entsprechende Maske ausgeblendet, so daß nur der Wert von $\Delta n$ berücksichtigt wird, um die Adresse des nächsten Segmentes zu ermitteln.

Der Interpreter enthält -wie aus Fig. 9 zu ersehen -ein erstes Bit, das mit "SKEY" bezeichnet ist. Steht dieses Bit auf einer 0, so handelt es sich um einen "normalen" Interpreter mit den Interpreterbits $I0$ bis $I2$. Steht dieses Bit "SKEY" dagegen auf einer 1, so bezeichnet dies einen String oder eine sonstige Sonderfunktion, wobei über die rechts in Fig. 9 ersichtlich Tabelle wiederum die Tasten "Control" (C) und "Shift" (S) verschiedene Code-Bytes oder Strings ansprechen können.

Als weitere Besonderheit ist noch hervorzuheben, daß einige Codes in den einzelnen Segmenten des ROMs oder des EEPROMs so aufgebaut sein können, daß sie je nach Befehlsebene (Bits A3 und A4 der Fig. 5) durch einfache Logikfunktionen modifiziert werden können. Es muß dann pro Segment in diesen Fällen nur ein Code abgespeichert werden, der dann mittels einer Logikfunktion, beispielsweise über eine EX-OR-Verknüpfung, unter Auswahlsteuerung durch die Bits A3 und A4 modifiziert wird. Dies ist nicht in allen Fällen möglich, da hierdurch der Aufwand für die Umrechnungslogik zu groß würde. Bei den alpha-numerischen Tasten der Tastatur lassen sich jedoch entsprechende Zuordnungen finden, die durch eine einzige, in allen Fällen gültige Umrechnungslogik realisiert werden kann, wodurch man weiter Speicherplatz einspart - (Fig. 18).

Im folgenden wird die Arbeitsweise des Converters anhand der Fig. 12 und 16 ausführlicher erläutert. Fig. 12 zeigt ein Prinzip-Blockschaltbild des Converters, während Fig. 16 ein Flußdiagramm zeigt.

Alle in Fig. 12 dargestellten Baugruppen mit Ausnahme des EEPROMs 16 sind Bestandteile des Mikroprozessors 6. Die Umwandlungstabellen gemäß den Fig. 13 und 14 sind im EEPROM 16 und im ROM 17 gespeichert. Die Tastenkennung entsprechend der Bitfolge gem. Fig. 5 wird unter der Steuerung einer Ablaufsteuerung 18 in ein Register 19 eingelesen. Ausgewählte Bits, nämlich hier die Bits B0 bis B6 des Registers 19 werden in einem Vergleicher 20 mit der Tastenkennung des EEPROMs 16 verglichen. Hierzu ist das EEPROM 16 über einen mehrpoligen Schalter 21 zunächst mit dem Vergleicher 20 verbunden. Stellt der Vergleicher 20 eine Übereinstimmung fest, so wird von der Ablaufsteuerung 18 ein Befehl erzeugt, mit welchem die Daten bzw. Codes aus dem EEPROM 16 in ein weiteres Schieberegister 22 ausgelesen werden. Bei Nichtübereinstimmung wird der Wert $\Delta n$ der im EEPROM 16 gespeicherten Tabelle in einen Addierer 23 übernommen und zu der in einem Register 24 zwischengespeicherten vorherigen Summe addiert. In dem Register 24 steht damit die "Adresse" für das nächste Segment der EEPROM-Tabelle. Wurde im EEPROM keine passende Kennung gefunden, so wird über die Ablaufsteuerung 18 der Schalter 21 umgeschaltet, wodurch das ROM 17 mit dem Vergleicher verbunden wird. Gleichzeitig wird das Register 24 auf 0 gesetzt. Es erfolgt dann eine Abfrage der im ROM 17 gespeicherten Tabelle.

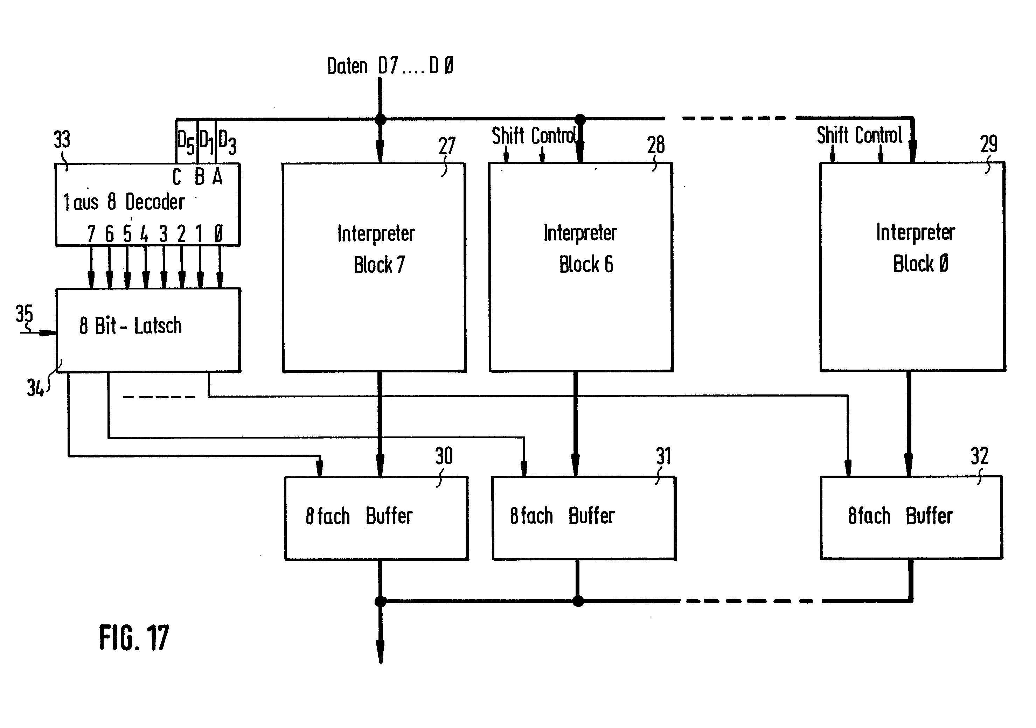

Wie im Zusammenhang mit Fig.14 erläutert wurde, enthält die ROM-Tabelle keine Tastaturnummer. Diese wird vielmehr errechnet und zwar über den Zähler 25. Der setzbare Zähler 25 beginnt mit einem vorgegebenen Zählerstand, beispielsweise dem Zählerstand 00 und zählt aufgrund von Impulsen der Ablaufsteuerung nach jedem Segment um einen Schritt weiter. Dieser Zählerstand wird dann in dem Vergleicher 20 mit der Tastenkennung (von 19) verglichen, wobei dann solange das ROM abgearbeitet wird, bis das der gedrückten Taste zugeordnete Segment erreicht ist. Dann wird aus dem ROM 17 der zugeordnete Code in das Schieberegister 22 ausgelesen, wobei vor die Eingänge des Schieberegisters 22 noch ein "Interpreter" 26 geschaltet ist. Dieser wird im Zusammenhang mit Fig. 17 und 18 erläutert.

Die entsprechende Ablauffolge ist auch in Fig. 16 dargestellt. Nach einer Initialisierung wird zunächst geprüft, ob ein RSIG-Impuls vorhanden ist. Ist dies der Fall, so wird das entsprechende Wort in das Register 19 eingelesen. Über eine Logik (nicht dargestellt) wird geprüft, ob es sich um ein gültiges Wort handelt, was beispielsweise durch die Anzahl der Bits sowie die Bits S, T, A2 und A1 erfolgen kann. Ist das Wort gültig, so wird das EEPROM 16 abgefragt, ob für dieses Wort ein Code abgelegt ist. Ist dies der Fall, so wird die entsprechende Adresse in der EEPROM-Tabelle bereitgestellt und dann das Wort ausgelesen. Ist dies hingegen nicht der Fall, so wird entsprechend das ROM abgefragt und dann ebenfalls die Adresse der ROM-Tabelle bereit gestellt. Anschließend wird geprüft, ob es sich hierbei um einen gültigen Code handelt, worauf dann der Code ausgelesen und über das Register 22 (Fig. 12) in Form eines seriellen Codes ausgegeben wird.

Es wird jetzt auf Fig. 17 Bezug genommen. Die aus dem EEPROM 16 oder dem ROM 17 ausgelesenen Daten sind wie folgt strukturiert: Zunächst wird das Byte "Interpreter + $\Delta$ n" ausgelesen und gelangt über den Datenbus (Bezeichnung: Daten D7 ... D0) zu dem Interpreter 26 Fig. 12). Danach werden dann die im EEPROM 16 oder dem ROM 17 in dem entsprechenden Segment abgespeicherten Codes (es kann auch nur ein Code sein) in den Interpreter eingelesen. Auch dies erfolgt über den Datenbus.

Der Interpreter ist gemäß Fig. 17 wie folgt aufgebaut. Er enthält mehrere Interpreterblöcke 27, 28 und 29. Bei den acht verschiedenen Interpreter-Möglichkeiten gemäß Fig. 9 mit den Interpreterbits I0, I1 und I2 sind hier dann acht Interpreterblöcke vorgesehen. Jedem Interpreterblock ist ein Achtfach-Pufferspeicher 30, 31 bzw. 32 nachgeschaltet, wobei die Verbindung durch Achtfach-Datenleitungen hergestellt ist.

Weiterhin enthält der Interpreter einen Decoder 33, der hier ein Eins-aus-acht-Decoder ist. Seinen drei Steuereingängen werden die Datenbits D3, D4 und D5 zugeführt, die den Interpreterbits I0, I1 bzw. I2 (gemäß Fig. 9) entsprechen. Je nach Kombination dieser Datenbits erscheint dann an einem der acht Ausgänge des Decoders 33 ein Signal, das einem Acht-Bit-Latch 34 zugeführt wird, das im Prinzip acht Flipflops enthält. Jedes dieser Flipflops ist mit einem der Pufferspeicher 30, 31 bzw. 32 verbunden. Ein Steuereingang 35 des Acht-Bit-Latch 35 ist mit der Ablaufsteuerung 18 (Fig. 12) verbunden.

Die Arbeitsweise des so aufgebauten Interpreters ist wie folgt:
Aus dem EEPROM 16 bzw. dem ROM 17 gelangt zunächst das Byte "Interpreter + $\Delta$ n" auf die Datenleitung. Die Interpreterbits I0, I1 und I2 (Fig. 9), die hier als Datenbits D3, D4 und D5 bezeichnet sind, wählen den entsprechenden Interpreter gemäß der links unten in Fig. 9 angegebenen Tabelle aus. In Fig. 17 wird entsprechend dieser Bitkombination eines der Flipflops des Acht-Bit-Latch 34 gesetzt und aktiviert damit einen der Pufferspeicher 30, 31 ... 32.

Darauffolgend werden dann aus dem EEPROM 16 bzw. dem ROM 17 die Code-oder Datenbytes ausgelesen (vgl. Fig. 15). Sie gelangen parallel zu allen Interpreterblöcken 27, 28 und 29, in denen diese Datenbytes in verschiedener Weise verarbeitet werden.

Im einfachsten Falle, bei dem in allen vier Ebenen eine identische Belegung vorgesehen ist, ist im ROM 17 bzw. im EEPROM 16 nur ein Datenbyte abgespeichert, das unverändert durchgeschaltet wird. Der hierfür benötigte "Interpreterblock" besteht demgemäß lediglich aus Leitungen, die die Daten unmittelbar an den zugeordneten Pufferspeicher weiterleiten.

Im anderen Extremfall, bei dem jeder Befehlsebene ein anderer Code zugeordnet ist und die Codes der einzelnen Ebenen sich nicht durch einfachere logische Operationen ineinander umwandeln lassen, ist in dem EEPROM 16 bzw. dem ROM 17 für jede Befehlsebene ein eigenes Datenbyte abgespeichert, also hier vier aufeinanderfolgende Bytes. Diese werden dann nacheinander in die Interpreter eingelesen. Der zuvor ausgewählte Interpreterblock enthält für diesen Fall einen Byte-Zähler, der entsprechend den Bits für "Shift" und "Control" bestimmt, das wievielte Datenbyte als gültiges Datenbyte an den zugeordneten Pufferspeicher ausgegeben werden soll.

Eine weitere Möglichkeit für den Aufbau eines Interpreterblocks ist der Fall, daß die Datenbits der vier verschiedenen Befehlsebenen zwar in jeder Ebene verschieden sind, sich jedoch mit einfachen logischen Operationen aus einem Grundcode ableiten lassen. Dies ist beispielsweise bei der Normbelegung der Fall. Der zugehörige Interpreterblock ist in Fig. 18 dargestellt. Im Prinzip muß für diesen Fall im ROM 17 oder im EEPROM 18 nur ein Datenbyte abgespeichert sein, das dann mit fest vorgegebenen "Masken" einer logischen Verknüpfung, beispielsweise einer Exklusiv-Oder-Verknüpfung unterzogen wird. Über "Shift" und "Control" wird die entsprechende Maske ausgewählt.

Für die vier Befehlsebenen ist je eine Maske 36, 37, 38 bzw. 39 vorgesehen. Die Maske 36 ist für die erste Befehlsebene mit "Shift" gleich "0" und "Control" gleich "0". Die zweite Maske 37 für die Befehlsebene mit "Shift" gleich "1" und "Control" gleich "0", die Maske 38 für die Ebene "Shift" gleich "0" und "Control" gleich "1" und die Maske 39 schließlich für die Ebene "Shift" gleich "1" und "Control" gleich "1". Bei dem Ausführungsbeispiel mit Datenbytes von einer Länge von acht Bit haben auch die Masken jeweils acht Bit. Sie können fest verdrahtet sein oder durch setzbare Register, Flipflops oder ähnliches realisiert sein. Die jeweils acht Ausgänge jeder Maske sind an einen achtfach Eins-aus-vier-Demultiplexer 40 angeschlossen. Dieser Demultiplexer 40 wird über die Bits für "Shift" und "Control" gesteuert, so daß je nach Zustand dieser Bits die entsprechende Maske zu einer Logikschaltung 41 durchgeschaltet wird, die im dargestellten Ausführungsbeispiel ein Achtfach-EX-OR-Gatter ist. Dort werden die vom EEPROM 16 oder vom ROM 17 auf der mit "DATA" bezeichneten Leitung ankommenden Datenbits mit den durchgeschalteten Maskenbits verknüpft. Das Ergebnis dieser (Exklusiv-Oder-) Verknüpfung erscheint dann am Ausgang der Logikschaltung 41 und wird in den zugeordneten Pufferspeicher (30, 31 oder 32 der Fig. 17) eingelesen. Ein Beispiel ist in der in Fig. 18 rechts unten angegebenen Tabelle ausgeführt.

Nach Beendigung dieses Vorganges wird von der Ablaufsteuerung über die Leitung 35 das Acht-Bit-Latch 34 wieder freigegeben, so daß es durch neu ankommende Daten gesetzt werden kann.

Mit den drei oben beschriebenen grundlegenden Prinzipien für den Aufbau der Interpreterblöcke können die weiteren Interpreterblöcke ohne weiteres realisiert werden. Ist ein Interpreter beispielsweise invariant gegenüber der Taste "Control", so benötigt der zugeordnete Interpreterblock natürlich auch keinen Eingang hierfür.

Mit der Erfindung wird also zusammengefaßt eine universell programmierbare Tastatur geschaffen, die hardwaremäßig von der vom Benutzer gewünschten Codierung unabhängig ist. Es müssen also nicht mehr kundenspezifische Tastaturen gefertigt werden. Durch die beschriebenen Maßnahmen wird trotz der großen Flexibilität nur minimaler Speicherplatz benötigt. Die Tastatur kann werksseitig mit einem Grundcode versehen sein (der im ROM gespeichert ist). Zusätzlich kann werksseitig oder durch den Benutzer eine freie Codierung des EEPROMs durchgeführt werden.

Sämtliche in den Patentansprüchen, der Beschreibung und der Zeichnung dargestellten technischen Einzelheiten können sowohl für sich als auch in beliebiger Kombination miteinander erfindungswesentlich sein.

## Ansprüche

1. Universell programmierbare Tastatur mit einer Schaltermatrix, einem dieser nachgeschalteten Encoder, der ein Tastenkennungssignal erzeugt und einem dem Encoder nachgeschalteten, als elektrisch programmierbarer Speicher ausgebildeten Codewandler, dadurch gekennzeichnet, daß der Codewandler einen fest programmierten Speicher - (ROM 16) und einen elektrisch löschbaren, programmierbaren Speicher (EEPROM 17) aufweist, daß eine Ablaufsteuerung (18) das vom Encoder kommende Tastenkennungssignal zuerst dem EEPROM (17) zuleitet, wo geprüft wird, ob unter einer durch das Tastenkennungssignal be stimmten Adresse ein oder mehrere Codes gespeichert sind, der bzw. die dann ausgelesen werden und daß nur bei negativem Prüfergebnis das Tastenkennungssignal dem ROM (16) zugeleitet wird, aus welchem ein unter der durch das Tastenkennungssignal bestimmten Adresse gespeicherter Code ausgelesen wird.

2. Tastatur nach Anspruch 1, dadurch gekennzeichnet, daß mehrere EEPROMs (17) in Kaskade hintereinander geschaltet sind.

3. Tastatur nach Anspruch 1 oder 2, dadurch gekennzeichnet, daß die Schaltermatrix in zwei Teile (1, 1') unterteilt ist, daß eine Blocksteuerung - (10) vorgesehen ist, die erkennt, ob eine Taste des einen oder des anderen Teiles der Schaltermatrix gedrückt ist, daß die Blocksteuerung (10) einen Umschalter (12) betätigt, der den einen oder anderen Teil (1, 1') der Schaltermatrix mit dem Encoder (9) verbindet und daß der Encoder (9) in Abhängigkeit vom Ausgangssignal der Blocksteuerung (10) ein "Blockbit" (B6) im Tastenkennungssignal setzt.

4. Tastatur nach einem oder mehreren der Ansprüche 1 bis 3, dadurch gekennzeichnet, daß mindestens zwei zusätzliche Steuertasten (T12, T24 "Shift" und T28 "Control") vorgesehen sind, durch welche zusätzliche, vier verschiedene Befehls-"Ebenen" bestimmende Ebenenbits (A3, A4) des Tastenkennungssignales gesetzt werden.

5. Tastatur nach einem oder mehreren der Ansprüche 1 bis 4, dadurch gekennzeichnet, daß ein Vergleicher (20) vorgesehen ist, der das Tastenkennungssignal (19) mit der im EEPROM (16) oder dem ROM (17) als Adresse gespeicherten Tastenkennungssignal vergleicht und bei positivem Vergleichsergebnis (bzw. Übereinstimmung) über ein an die Ablaufsteuerung (18) übermitteltes Signal veranlaßt, daß die unter der entsprechenden Adresse im EEPROM (16) oder im ROM (17) gespeicherten Codes ausgelesen werden, daß weiterhin ein Addierer (23) vorgesehen ist, dem unter Steuerung des Vergleichers (20) und/oder der Ablaufsteuerung (18) im Falle der Nichtübereinstimmung (negatives Vergleichsergebnis) aus dem ROM (17) oder dem EEPROM (16) ein die Länge von unter der jeweiligen Adresse abgespeicherten Datenfeldern bezeichnetes Signal ( $\Delta$ n) zugeführt wird, wobei die kummulierte Summe dieser Signale ( $\Delta$ n) die nächste Adresse von gespeicherten Codes darstellt, wobei die Ablaufsteuerung (18) zuerst das EEPROM (16) und ggf. das ROM (17) solange abfragt, bis der Vergleicher eine Übereinstimmung festgestellt hat.

6. Tastatur nach einem oder mehreren der Ansprüche 1 bis 5, dadurch gekennzeichnet, daß für die Festlegung der abzufragenden Adresse des ROMs (17) ein Zähler (25) vorgesehen ist, dessen Zählinhalt im Vergleicher 20 mit dem Tastenkennungssignal (von 19) verglichen wird.

7. Tastatur nach einem oder mehreren der Ansprüche 1 bis 6, dadurch gekennzeichnet, daß die vom EEPROM (16) oder vom ROM (17) ausgelesenen Codes einer Interpreterschaltung (26) zugeführt werden wo sie in Abhängigkeit der Stellung der Tasten "Shift" und/oder "Control" modifiziert werden.

8. Tastatur nach Anspruch 7, dadurch gekennzeichnet, daß die Interpreterschaltung (26) eine Logikschaltung (41) aufweist, in welcher die von dem EEPROM (16) oder dem ROM (17) kommenden Codes mit fest vorgegebenen Werten von Masken (36, 37, 38, 39) verknüpft werden, wobei die für die jeweilige Verknüpfung maßgebliche Maske durch die Stellung der Tasten "Shift" und "Control" festgelegt sind.

9. Tastatur nach Anspruch 7, dadurch gekennzeichnet, daß die Interpreterschaltung (26) einen Codezähler enthält, sowie mindestens zwei Zwischenspeicher, wobei der Codezähler die unter einer Adresse im ROM (17) bzw. im EEPROM (16) gespeicherte Anzahl von Codes zählt, wobei jeder dieser Codes in einen der Zwischenspeicher eingelesen wird und wobei in Abhängigkeit von der Stellung der Tasten "Shift" und/oder "Control" festgelegt wird, welcher der Zwischenspeicher ausgelesen wird.

Tastatur

Empfänger + Converter

FIG. 1

0 232 862

SHIFT   CONTROL

11 Ebenen-Steuerung

13 Repeat-Steuerung

9 SAA 3006

128 Befehle in 4 Ebenen

10 Block-Steuerung

12

14 IR-Stufe

64+64 Tasten

64 / 127

Ø / 63

1' 1

Z  Y  X

2  4  8  8

FIG. 2

0 232 862

72 (92)

Befehle

in 4 Ebenen

Shift + CTRL

CTRL

Shift

unShift

FIG. 3

Shift   Control

Z Ø

Z1

Z2

Z3

DR 6

DR 7

Blocksteuerung

| | Ebenen | (Adress) | | Steuerung | | |
|---|---|---|---|---|---|---|
| | DR 6 | | | DR 7 | | |
| | | A4 A3 | A2 A1 | B6 | | A4 A3 | A2 A1 | B6 |
| Z Ø | 6 | 0 0 | 11 | 0 | 7 | 0 0 | 11 | 1 |
| Z1 | 14 | 01 | 11 | 0 | 15 | 01 | 11 | 1 |
| Z2 | 22 | 10 | 11 | 0 | 23 | 10 | 11 | 1 |
| Z3 | 30 | 11 | 11 | 0 | 31 | 11 | 11 | 1 |

2 Ebenen – Bits

Blockbit

FIG. 4

0 232 862

Übertragungsformat 14-Bit - Biphase
(SAA 3006 - Valvo)

| S | S | T | A4 | A3 | A2 | A1 | B6 | B5 | B4 | B3 | B2 | B1 | B0 |
|---|---|---|----|----|----|----|----|----|----|----|----|----|----|

| | | | |
|---|---|---|---|
| B0 - B6 | : Befehls - Bits | ( Code $\quad$ 0 ... 127 ) | |
| A3 | : Shift - Bit | ( 0 bei Unshift , $\quad$ 1 bei Shift ) | |
| A4 | : Control - Bit | ( $\qquad$ , 1 bei Control) | |
| A1, A2 | : Adress - Bits | ( immer „1" ) | |
| T | : Toggle - Bit | ( ändert sich bei jedem gesendeten Wort -! entspricht nicht der Original - Funktion im SAA 3006) | |
| S | : Startbits | ( „1" ) | |

$\hat{=}$ „1"  $\qquad$ $\hat{=}$ „0"

1 Bit  $\qquad$  1 Bit

**FIG. 5**

0 232 862

Tastencodes

FIG. 6

| T1 | T2 | T3 | T4 | T5 | T6 | T7 | T8 |
|---|---|---|---|---|---|---|---|
| 38 | 121 | 65 | 37 | 29 | 24 | 21 | 81 |
| T9 | T10 | T11 | T12 | T13 | T14 | T15 | T16 |
| 73 | 30 | 22 | SHIFT | 16 | 80 | 17 | 20 |
| T17 | T18 | T19 | T20 | T21 | T22 | T23 | T24 |
| 19 | 18 | 26 | 27 | 28 | 25 | 88 | SHIFT |
| T25 | T26 | T27 | T28 | T29 | T30 | T31 | T32 |
| 89 | 46 | 97 | CONTROL | 32 | 96 | 33 | 36 |
| T33 | T34 | T35 | T36 | T37 | T38 | T39 | T40 |
| 35 | 34 | 10 | 11 | 12 | 9 | 72 | 8 |
| T41 | T42 | T43 | T44 | T45 | T46 | T47 | T48 |
| 13 | 14 | 6 | 5 | Ø | 64 | 1 | 4 |
| T49 | T50 | T51 | T52 | T53 | T54 | T55 | T56 |
| 3 | 2 | 42 | 43 | 44 | 41 | 104 | 40 |
| T57 | T58 | T59 | T60 | T61 | T62 | T63 | T64 |
| 45 | 105 | 54 | 113 | 53 | 48 | 112 | 49 |
| T65 | T66 | T67 | T68 | T69 | T70 | T71 | T72 |
| 52 | 51 | 50 | 58 | 59 | 60 | 57 | 120 |
| T73 | T74 | T75 | | | | | |
| 56 | 61 | 62 | | | | | |

0 232 862

FIG. 7

Interpretation des (der) Code – Bytes in 4 Ebenen

FIG. 8

**Interpreter – Byte + Δ**

SKEY : String ( oder Sonderfunktion )

| SKEY | |
|------|--|

"Interpreter – Bits"

| 0 | R | $I_2$ | $I_1$ | $I_0$ | $|\Delta n|$ | | |
|---|---|---|---|---|---|---|---|
| Code | | | | | | | |

"repeat – Bit"

| 1 | R | | | Δ | n | | |
|---|---|---|---|---|---|---|---|
| SEND | C | S | | ΔS | | | |

n Code – Bytes

| $I_2$ | $I_1$ | $I_0$ | | |
|-------|-------|-------|----|--------------------------------|
| 0 | 0 | 0 | ID | Identische Beleg. in 4 Ebenen |
| 0 | 0 | 1 | ZI | Zifferntastenbelegung |
| 0 | 1 | 0 | NO | Normbelegung |
| 0 | 1 | 1 | ZE | identische Beleg. im CTRL – B. |
| 1 | 0 | 0 | EI | 4 verschiedene Einzel –Beleg. |
| 1 | 0 | 1 | DC | Doppel – Code (Btx) |
| 1 | 1 | 0 | UM | Umlaut – Code (Btx) |
| 1 | 1 | 1 | SS | Short –String in 4 Ebenen (max.7) |

S : Shift  
C : Control  } Ebenenwahl

**FIG. 9**

0 232 862

## FIG. 10

Test

RISG

RSIG - Code

µ C

+

Code - Tabellen

6

serielle Schnittstelle
(1200 Baud)

Baud - Rate

EEPROM

7 ( 16)

* String - Tabellen
* Änderungen
* IR - Parameter ( Übertragungsrate )
* RS 232 - Parameter ( Baudrate )
* Kennbytes die die Tabellenstruktur beschreiben
* Tasten „änderbar"

FIG. 11

0 232 862

FIG. 12

Ablaufsteuerung

18

1 → Tast. Kenn. 19

2 → Vergleicher 20
3 ←
4 ←

21

5

23

A + 1 → D | A

6

Adierer
S

A + Δn

7

16 17

D D

EEPROM ROM

A A

8 → Summe
9 → A

24

Interpreter-Bit-Verarbeitung

25 26

Control

Interpreter

Shift

10 → Zähler
11 →
12 ←

„1" „1" Ø

13 → 22
14 → Schieberegister 8

## Tabellenaufbau EEPROM

| |
|---|
| |
| Status -<br><br>Steuerwort<br><br>Bereich |
| |
| N KEY    (Anzahl der geänderten<br>oder ergänzten Tasten) |
| Tastatur - Nr<br>(Tastenkennung) |
| Interpreter + +Δn |
| Code  ; Data |
| Tastatur - Nr<br>(Tastenkennung) |
| Interpreter + Δn |
| Code 1 ; Data 1 |
| Code 2 ; Data |
| Tastatur Nr<br>(Tastenkennung) |

System Steuerbytes

z.B. Übertragungsfrequenz

Baudrate,

Pausen ... usw.

Taste    $n_x$

Taste    $n_y$

# FIG. 13

Tabellenaufbau ROM ( im µ C )

| |
|---|
| Interpreter + Δn |
| Code |
| |
| |
| |
| Interpreter + Δn |
| Code |
| ⋮ |
| Interpreter + Δn      = Ø |
| ⋮ |
| Interpreter + Δn |
| Stringebene+ΔS |
| „String"- Code |
| String - Code |

T 45 C 00

T 47 C 01

TNB C 08  (Taste nicht belegt
oder vorhanden)

TXY  CXX

FIG. 14

FIG. 15

0 232 862

Start
Btx – Conv

Initialisierung

RSIG – Impuls — nein

RSIG Wort einlesen

Wort gültig — nein

ja

Wort im EEPROM — nein

ja

W. im ROM

nein

ja

Adr. EEPROM – Tas ber. st.

Adr. ROM – TAB bereitst.

SRA

Convertierung

Seriell – Out

FIG. 16

Daten D7 .... D Ø

Shift Control                                    Shift Control

33

D5 D1 D3

C  B  A

1 aus 8 Decoder

7 6 5 4 3 2 1 Ø

27                          28                                    29

Interpreter          Interpreter                      Interpreter

Block 7              Block 6                          Block Ø

35

8 Bit – Latsch

34

30                          31                                    32

8 fach  Buffer       8 fach  Buffer                   8 fach  Buffer

FIG. 17

0 232 862

FIG.18